# EUROPEAN PATENT APPLICATION

(11) **EP 4 439 918 A1**
(43) Date of publication of application: **02.10.2024**
(21) Application number: 24150771.4
(22) Date of filing: 08.01.2024
(51) Int. Cl.: H02J 7/00, H01M 10/42

(54) **BATTERY PACK INCLUDING ANALOG FRONT ENDS**

(30) Priority: 27.03.2023 KR 20230039965; 20.06.2023 KR 20230078922
(71) Applicant: Samsung SDI Co., Ltd., Yongin-si, Gyeonggi-do 17084 (KR)
(72) Inventor: HWANG, Kumyul, 17084 Yongin-si (KR); JEONG, Hyeoncheol, 17084 Yongin-si (KR); YOO, Junho, 17084 Yongin-si (KR)
(74) Representative: Marks & Clerk LLP

(57) **Abstract**

A battery pack includes: a plurality of battery blocks, each including a plurality of battery cells; a plurality of analog front ends (AFEs) sequentially located, and to monitor states of the plurality of battery blocks, respectively; a main management unit to communicate with the plurality of AFEs; and a power compensation circuit connected to a highest stage AFE from among the plurality of AFEs, and including a power compensation resistor and a power compensation switch connected in series with each other. The highest stage AFE includes: a power circuit to generate a driving voltage from a block voltage of a highest stage battery block from among the plurality of battery blocks; a pair of output voltage pins to output the driving voltage to the power compensation circuit; and a global purpose input output pin (GPIO) to output a power compensation control signal to control the power compensation switch.

## Description

### BACKGROUND

### 1. Field

Aspects of one or more embodiments of the present disclosure relate to a battery pack.

### 2. Description of the Related Art

A secondary battery has electrical characteristics, such as high energy density and/or the like, and is used in a kind of battery pack in various ways, such as being included in a mobile electronic apparatus, a battery system, an electric vehicle (EV), a hybrid electric vehicle (HEV), or the like.

The battery pack includes a battery module and a battery management system. The battery management system includes a main management unit, and a module management unit for managing the battery module. The module management unit includes an analog front end (AFE).

The above information disclosed in this Background section is for enhancement of understanding of the background of the present disclosure, and therefore, it may contain information that does not constitute prior art.

### SUMMARY

Cell voltages of battery cells connected to a plurality of analog front ends (AFEs) may not become uniform, because the power consumption of each of the AFEs included in the battery pack may not be the same. This may cause performance degradation of the battery pack.

One or more embodiments of the present disclosure are directed to a battery pack that may equalize or substantially equalize the amount of current consumption between analog front ends (AFEs) in the battery pack.

However, the aspects and features of the present disclosure are not limited to those described above, and additional aspects and features will be set forth, in part, in the description that follows, and in part, will be apparent from the description, or may be learned by practicing one or more of the presented embodiments of the present disclosure.

According to one or more embodiments of the present disclosure, a battery pack includes: a plurality of battery blocks, each including a plurality of battery cells; a plurality of analog front ends (AFEs) sequentially located, and configured to monitor states of the plurality of battery blocks, respectively; a main management unit configured to communicate with the plurality of AFEs; and a power compensation circuit connected to a highest stage AFE from among the plurality of AFEs, and including a power compensation resistor and a power compensation switch connected in series with each other. A lowest stage AFE from among the plurality of AFEs is configured to communicate with an upper stage AFE thereof and the main management unit, and the highest stage AFE is configured to communicate with a lower stage AFE thereof. The highest stage AFE includes: a power circuit configured to generate a driving voltage from a block voltage of a highest stage battery block from among the plurality of battery blocks; a pair of output voltage pins configured to output the driving voltage to the power compensation circuit; and a global purpose input output (GPIO) pin configured to output a power compensation control signal to control the power compensation switch.

In an embodiment, the power compensation control signal may include a PWM signal having a duty ratio.

In an embodiment, the main management unit may be configured to control the duty ratio of the PWM signal.

In an embodiment, the highest stage AFE may further include one pair of input voltage pins configured to receive the block voltage, and the one pair of input voltage pins may be connected to terminals at opposite ends of highest stage battery cells that are connected in series in the highest stage battery block, respectively.

In an embodiment, the highest stage AFE may further include: a plurality of battery pins; a multiplexer configured to select two adjacent battery pins from among the plurality of battery pins; an analog-to-digital converter (ADC) configured to convert a voltage between the two adjacent battery pins selected by the multiplexer into a digital value; and a controller configured to collect cell voltages from each of the highest stage battery cells based on the digital value output by the ADC. The highest stage battery cells may be connected between the plurality of battery pins.

In an embodiment, the highest stage AFE may further include: a plurality of balancing pins corresponding to the highest stage battery cells, respectively; a plurality of balancing resistors connected between the plurality of balancing pins and some of the plurality of battery pins; a plurality of balancing switches connected between the plurality of balancing pins and some of the plurality of battery pins; and a balancing control circuit configured to control the plurality of balancing switches by control of the controller.

In an embodiment, the cell voltages of the highest stage battery cells collected by the highest stage AFE may be transferred to the main management unit through other AFEs from among the plurality of AFEs.

In an embodiment, each of the other AFEs may include: a controller configured to collect the cell voltages of the battery cells of a corresponding battery block from among the plurality of battery blocks; a low communication circuit configured to transmit the cell voltages to a lower stage AFE thereof; and a high communication circuit configured to transmit a command of the main management unit received through the low communication circuit to a higher stage AFE thereof.

In an embodiment, the highest stage AFE may include one AFE integrated circuit (IC) including the one pair of input voltage pins, the one pair of output voltage pins, and the GPIO pin.

In an embodiment, the plurality of AFEs may include at least one intermediate AFE sequentially located between the highest stage AFE and the lowest stage AFE, and the at least one intermediate AFE may be configured to communicate with an upper stage AFE thereof and a lower stage AFE thereof.

At least some of the above and other features of the invention are set out in the claims.

### BRIEF DESCRIPTION OF THE DRAWINGS

The above and other aspects and features of the present disclosure will be more clearly understood from the following detailed description of the illustrative, nonlimiting embodiments with reference to the accompanying drawings, in which:
FIG. 1 illustrates a battery pack according to one or more embodiments;
FIG. 2 illustrates a first kind of analog front end (AFE) according to one or more embodiments; and
FIG. 3 illustrates a second kind of AFE according to one or more embodiments.

### DETAILED DESCRIPTION

Hereinafter, embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, redundant description thereof may not be repeated.

When a certain embodiment may be implemented differently, a specific process order may be different from the described order. For example, two consecutively described processes may be performed at the same or substantially at the same time, or may be performed in an order opposite to the described order.

Spatially relative terms, such as "beneath," "below," "lower," "under," "above," "upper," and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below" or "beneath" or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, a first element, component, region, layer or section described below could be termed a second element, component, region, layer or section, without departing from the scope of the present disclosure.

It will be understood that when an element or layer is referred to as being "on," "connected to," or "coupled to" another element or layer, it can be directly on, connected to, or coupled to the other element or layer, or one or more intervening elements or layers may be present. Similarly, when a layer, an area, or an element is referred to as being "electrically connected" to another layer, area, or element, it may be directly electrically connected to the other layer, area, or element, and/or may be indirectly electrically connected with one or more intervening layers, areas, or elements therebetween. In addition, it will also be understood that when an element or layer is referred to as being "between" two elements or layers, it can be the only element or layer between the two elements or layers, or one or more intervening elements or layers may also be present.

The terminology used herein is for the purpose of describing particular embodiments and is not intended to be limiting of the present disclosure. As used herein, the singular forms "a" and "an" are intended to include the plural forms as well, unless the context clearly indicates otherwise. It will be further understood that the terms "comprises," "comprising," "includes," "including," "has," "have," and "having," when used in this specification, specify the presence of the stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. For example, the expression "A and/or B" denotes A, B, or A and B. Expressions such as "at least one of," when preceding a list of elements, modify the entire list of elements and do not modify the individual elements of the list. For example, the expression "at least one of a, b, or c," "at least one of a, b, and c," and "at least one selected from the group consisting of a, b, and c" indicates only a, only b, only c, both a and b, both a and c, both b and c, all of a, b, and c, or variations thereof.

As used herein, the term "substantially," "about," and similar terms are used as terms of approximation and not as terms of degree, and are intended to account for the inherent variations in measured or calculated values that would be recognized by those of ordinary skill in the art. Further, the use of "may" when describing embodiments of the present disclosure refers to "one or more embodiments of the present disclosure." As used herein, the terms "use," "using," and "used" may be considered synonymous with the terms "utilize," "utilizing," and "utilized," respectively.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

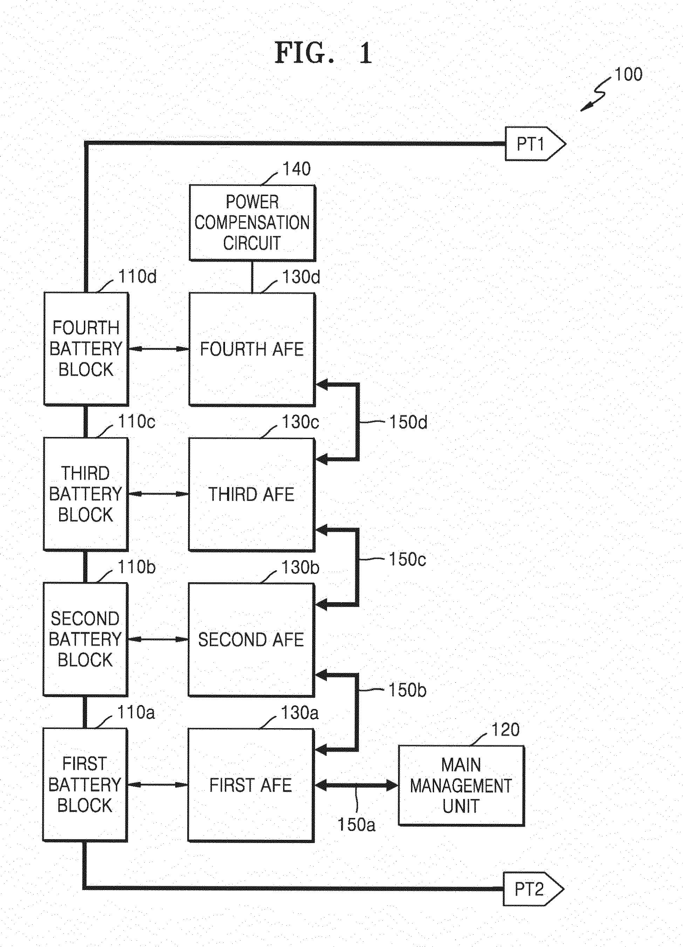

FIG. 1 illustrates a battery pack according to one or more embodiments.

Referring to FIG. 1, the battery pack 100 may include a plurality of battery blocks 110a to 110d connected between first and second pack terminals PT1 and PT2, a plurality of analog front ends (AFEs) 130a to 130d configured to monitor states of the plurality of battery blocks 110a to 110d, respectively, a main management unit (e.g., a main management circuit or controller) 120 configured to communicate with the plurality of AFEs 130a to 130d, and a power compensation circuit 140. The battery pack 100 may further include communication lines 150a to 150d for supporting communications between the plurality of AFEs 130a to 130d and the main management unit 120.

The plurality of battery blocks 110a to 110d may be connected in series between the first and second pack terminals PT1 and PT2. In FIG. 1, four battery blocks 110a to 110d are shown for convenience, but the present disclosure is not limited thereto. Two or more battery blocks may be connected in series between the first and second pack terminals PT1 and PT2. Hereinafter, the battery pack 110 including the first to fourth battery blocks 110a to 110d connected in series may be described in more detail as a representative example.

FIG. 1 illustrates that only the plurality of battery blocks 110a to 110d are connected between the first and second pack terminals PT1 and PT2, but the present disclosure is not limited thereto. A charge and discharge switch, main switches, and/or at least one of a precharge switch or a precharge resistor may be further connected between the first and second pack terminals PT1 and PT2. For example, a first main switch, the precharge switch, and the precharge resistor may be arranged between the fourth battery block 110d and the first pack terminal PT1, and a second main switch may be arranged between the first battery block 110a and the second pack terminal PT2.

The plurality of battery blocks 110a to 110d may be sequentially arranged between the first and second pack terminals PT1 and PT2. The first battery block 110a and the fourth battery block 110d may be located at opposite ends. For convenience, the first battery block 110a may be referred to as a lowest stage battery block, and the fourth battery block 110d may be referred to as a highest stage battery block. The second and third battery blocks 110b and 110c may be referred to as intermediate battery blocks. However, the lowest stage and the highest stage are merely used for distinguishing the stages from each other, and do not represent their positional relationships. Instead, it may be understood that the lowest stage and the highest stage represent connection relationships. For example, the lowest stage battery block represents a first battery block in a plurality of series-connected battery blocks and the highest stage battery block represents a final battery block in the plurality of series-connected battery blocks. The lowest stage battery block 110a may have the lowest potential, and the highest stage battery block 110d may have the highest potential. However, the present disclosure is not limited thereto, and reversely, the lowest stage battery block 110a may have the highest potential, and the highest stage battery block 110d may have the lowest potential. Hereinafter, the lowest stage battery block 110a having the lowest potential, and the highest stage battery block 110d having the highest potential may be described in more detail as a representative example.

It may be expressed that the second battery block 110b is located on the upper stage of the lowest battery block 110a, the third battery block 110c is located on the upper stage of the second battery block 110b, and the highest stage battery block 110a is located on the upper stage of the third battery block 110c. It may be also expressed that the third battery block 110c is located on the lower stage of the highest battery block 11 0d, the second battery block 110b is located on the lower stage of the third battery block 110c, and the lowest stage battery block 110a is located on the lower stage of the second battery block 110b.

Each of the plurality of battery blocks 110 to 110d may include a plurality of battery cells connected in series. The number of battery cells included in each of the battery blocks 110a, 110b, 110c and 110d may all be the same as each other. For example, each one of the battery blocks 110a, 110b, 110c and 110d may include 14 battery cells connected in series. The battery cells included in the fourth battery block 110d may be referred to as the highest stage battery cells.

The plurality of AFEs 130a to 103d may monitor the states of the plurality of battery blocks 110a to 110d, respectively. The first AFE 130a may monitor the battery cells of the first battery block 110a, and may be referred to as the lowest stage AFE. The second and third AFEs 130b and 130c may monitor the battery cells of the second and third battery blocks 110b and 110c, respectively, and may be referred to as the intermediate AFEs. The fourth AFE 130d may monitor the battery cells of the fourth battery block 110a, and may be referred to as the highest stage AFE. The plurality of AFEs 130a to 103d may be sequentially arranged in correspondence with the plurality of battery blocks 110a to 110d. The plurality of AFEs 130a to 130d may monitor the temperatures and/or the currents of the plurality of battery blocks 110 to 110d, the temperatures of the plurality of AFEs 130a to 130d, and/or the like.

Each of the plurality of AFEs 130a to 103d may be driven using power stored in the corresponding battery block from among the plurality of battery blocks 110a to 110d. For example, the first (e.g., the lowest stage) AFE 130a may be supplied with driving power from the lowest stage battery block 11 0a. The fourth (e.g., the highest stage) AFE 130d may be supplied with driving power from the highest stage battery block 110d.

The lowest stage AFE 130a may use the second and first communication lines 150b and 150a, respectively, to communicate with the second AFE 130b located on the upper stage thereof and the main management unit 120. The second AFE 130b may use the third and second communication lines 150c and 150b, respectively, to communicate with the third AFE 130c located on the upper stage thereof and the lowest stage AFE 130a located on the lower stage thereof. The third AFE 130c may use the fourth and third communication lines 150d and 150c, respectively, to communicate with the highest stage AFE 130d located on the upper stage thereof and the second AFE 130b located on the lower stage thereof. The highest stage AFE 130d may use the fourth communication line 150d to communicate with the third AFE 130c located on the lower stage thereof.

The highest stage AFE 130d may collect cell voltages of the highest stage battery cells of the highest stage battery block 110d, and may transmit the collected cell voltages to the main management unit 120 via the third, second, and first AFEs 130c, 130b, and 130a. The third AFE 130c may collect cell voltages of the battery cells of the third battery block 110c, and may transmit the collected cell voltages to the main management unit 120 via the second and first AFEs 130b and 130a. The second AFE 130b may collect cell voltages of the battery cells of the second battery block 110b, and may transmit the collected cell voltages to the main management unit 120 via the first AFE 130a. The first AFE 130a may collect cell voltages of the battery cells of the first battery block 110a, and may transmit the collected cell voltages to the main management unit 120 via the first communication line 150a. The main management unit 120 may collect all the cell voltages of the battery cells of the first to fourth battery blocks 110a to 110d.

Each of the first to fourth communication lines 150a to 150d may include a plurality of wirings. For example, each of the first to fourth communication lines 150a to 150d may include a transmission wiring composed of one pair of wirings, and a reception wiring composed of one pair of wirings. As another example, each of the first to fourth communication lines 150a to 150d may include a clock wiring, the transmission wiring, and the reception wiring.

While the first (e.g., the lowest stage), the second, and third AFEs 130a, 130b, and 130c each communicate with two elements, the highest stage AFE 130d may consume less power than the first (e.g., the lowest stage), the second, and third AFEs 130a, 130b, and 130c, because the highest stage AFE 130d communicates with only one element (e.g., the third AFE 130c). In some embodiments, a discharge amount of the highest battery block 110d may become smaller than those of the other battery blocks 110a to 110c, and the highest stage battery cells of the highest stage battery block 110d may have higher cell voltages. Furthermore, as time passes, the difference in the cell voltages may become gradually increased.

To address the differences in the cell voltages, the battery pack 100 according to one or more embodiments may further include the power compensation circuit 140 connected to the highest stage battery block 110d. The power compensation circuit 140 may be connected to the highest stage battery block 110d, and may be controlled by the main management unit 120 that collects all the cell voltages of the battery cells of the first to fourth battery blocks 110a to 110d.

The main management unit 120 may calculate an average cell voltage of the highest stage battery cells of the highest stage battery block 110d. The main management unit 120 may calculate an average cell voltage of the battery cells of the other battery blocks 110a to 110c.

As an example, the main management unit 120 may operate the power compensation circuit 140 if the average cell voltage of the highest stage battery block 110d is equal to or greater than a reference value (e.g., a preset or predetermined reference value) in comparison to the average cell voltage of the other battery blocks 110a to 110c. The reference value is a value representing a voltage difference between the average cell voltage of the highest stage battery block 110d and the average cell voltage of other battery blocks, above which the management unit 120 is configured to operate the power compensation circuit 140. For example, the average cell voltage of all battery blocks other than the highest stage battery block is subtracted from the average cell voltage of the highest stage battery block to obtain a voltage difference. This voltage difference is then compared to the reference value, and if the voltage difference is equal to or greater than the reference value, the main management unit 120 operates the power compensation circuit 140. Alternatively, the cell voltages of the highest stage battery cells of the highest stage battery block 110d may have a voltage difference smaller than the reference value from the cell voltages of the battery cells of the other battery blocks 110a to 110c. In this alternative the main management unit 120 does not operate the power compensation circuit.

As another example, the main management unit 120 may operate the power compensation circuit 140 to consume more current, as the voltage difference becomes larger, on the basis of the voltage difference calculated by subtracting the average cell voltage of the other battery blocks 110a to 110c from the average cell voltage of the highest stage battery block 110d. For example, the power compensation circuit 140 may be controlled by a PWM signal having a duty ratio determined by the voltage difference. Embodiments described herein include the determination of a voltage difference between an average cell voltage of a highest stage battery block and the average cell voltage of a plurality of lower stage battery blocks, but embodiments may not be limited to using the cell voltage of all lower stage battery blocks. For example, the main management unit 120 may determine the voltage difference between the average cell voltage of highest stage battery block and the average cell voltage of any single one of the other battery blocks, or the average cell voltage value of any subset of two or more battery blocks of the other battery blocks.

According to another example, if the main management unit transmits a command to the first to fourth AFEs 130a to 130d, the main management unit 120 may further transmit, to the highest stage AFE 130d, a command to operate the power compensation circuit 140. According to another example, if the main management unit 120 receives monitoring data from the first to fourth AFEs 130a to 130d, the main management unit 120 may further transmit, to the highest stage AFE 130d, a command to operate the power compensation circuit 140.

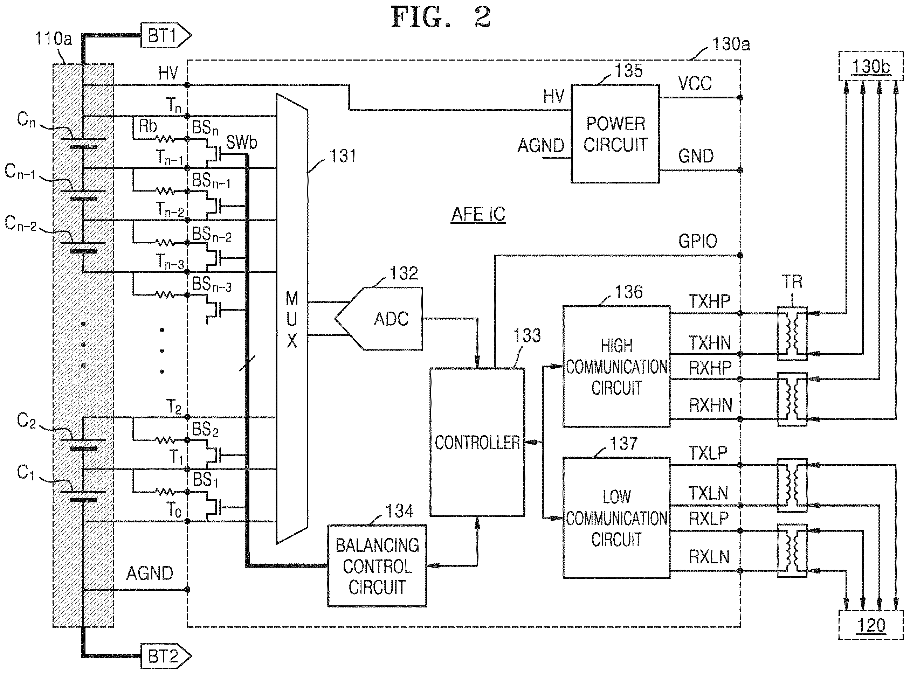

The first to third AFEs 130a, 130b and 130c that are configured to communicate with two elements may be referred to as a first kind of AFE. The first kind of AFE will be described in more detail below with reference to FIG. 2.

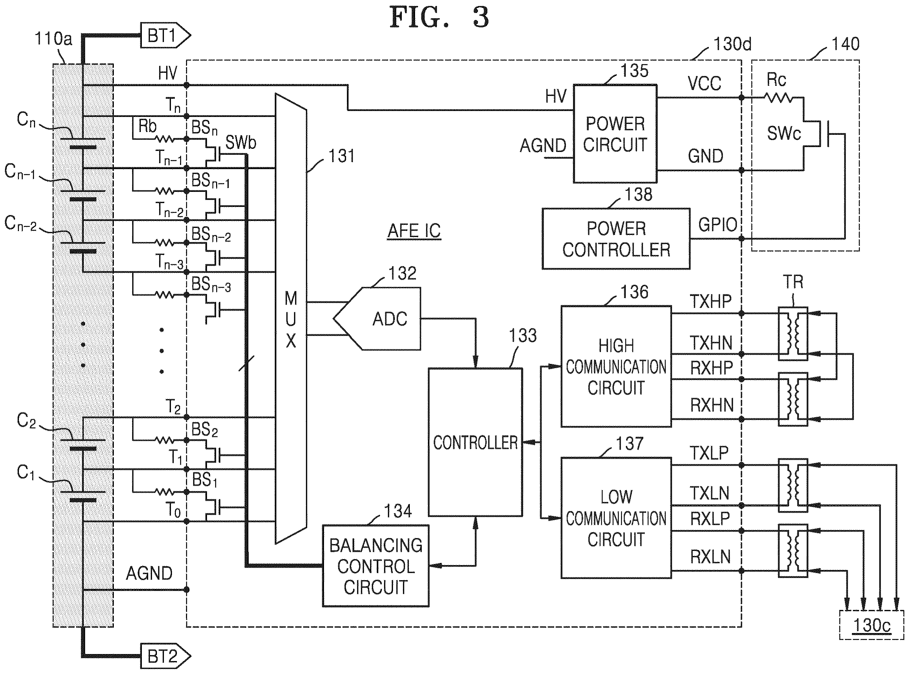

The highest stage AFE 130d that is configured to communicate with one element, and is connected with the power compensation circuit 140, may be referred to as a second kind of AFE. The second kind of AFE and the power compensation circuit 140 will be described in more detail below with reference to FIG. 3.

FIG. 2 illustrates a first kind of AFE according to one or more embodiments.

Referring to FIG. 2, the first to third AFEs 130a, 130b, and 130c, which are the first kind of AFEs, may have the same or substantially the same configuration as each other. For convenience, the first AFE 130a is shown in FIG. 2.

The first AFE 130a may be configured to monitor the cell voltages, the temperatures, and/or the like of the battery cells C₁ to Cₙ in the first battery block 110a, and may transmit state data of the first battery block 110a acquired by the monitoring to the main management unit 120. The first AFE 130a may be configured to transmit the command received from the main management 120 to the second AFE 130b, and may transfer the data received from the second AFE 130b to the main management unit 120. The first AFE 130a may be configured to perform cell balancing for equalizing or substantially equalizing the cell voltages of the battery cells C₁ to Cₙ in the battery block 110a.

The battery cells C₁ to Cₙ in the battery block 110a may be connected in series between first and second block terminals BT1, BT2. The first block terminal BT1 may be connected to the second block terminal of the second battery block 110b (e.g., see FIG. 1), and the second block terminal BT2 may be connected to the second pack terminal PT2.

The battery cells C₁ to Cₙ may be power storage portions, and be rechargeable secondary batteries. For example, the battery cells C₁ to Cₙ may include at least one selected from the group consisting of a lithium ion battery, a lithium polymer battery, a nickel cadmium battery, a nickel metal hydride battery (Ni-MH), a nickel-zinc battery (Ni-Zn), a lead-acid battery, and the like. The number and connection configurations of the battery cells C₁ to Cₙ and the number and connection configurations of the battery blocks 110a to 110d may be determined according to a desired output voltage and a desired power storage capacity for the battery pack 10. For convenience, the number of battery cells C₁ to Cₙ illustrated in FIG. 2 is n, where n may be 14 as a representative example. However, the present disclosure is not limited thereto, and n may be any suitable natural number, for example, such as 10, 12, or 16.

The first AFE 130a may include one AFE integrated circuit AFE IC. The AFE integrated circuit AFE IC may have one pair of input voltage pins HV and AGND, one pair of output voltage pins VCC and GND, and at least one global purpose input output (GPIO) pin GPIO. The one pair of input voltage pins HV and AGND may be connected to an anode and a cathode of the first battery block 110a, respectively, and a block voltage of the first battery block 110a may be applied thereto. The one pair of input voltage pins HV and AGND may be connected to the first and second block terminals BT1 and BT2, respectively. The one pair of input voltage pins HV and AGND may be connected to terminals at opposite ends of the battery cells C₁ to Cₙ of the first battery block 110a, respectively.

The first AFE 130a may include a power circuit 135 configured to generate the driving voltage Vcc for driving the first AFE 130a from the block voltage input through the input voltage pins HV and AGND. The power circuit 135 may be a DC-DC converter circuit. The power circuit 135 is shown as being mounted in the AFE integrated circuit AFE IC, but the power circuit 135 may be located outside the AFE integrated circuit AFE IC, and the driving voltage Vcc generated by the power circuit 135 may be supplied to the AFE integrated circuit AFE IC. In this case, the AFE integrated circuit AFE IC may include an input voltage pin for receiving the driving voltage generated by the power circuit 135, instead of the one pair of input voltage pins HV and AGND connected to the anode and cathode of the first battery block 110a, respectively.

The one pair of output pins VCC and GND may output the driving voltage Vcc generated by the power circuit 135 to the outside. The GPIO pin GPIO may be connected to, for example, a temperature sensor, and an analog temperature sensing signal may be input to the controller 133 through the GPIO pin GPIO.

The AFE integrated circuit AFE IC may have a plurality of battery pins T₀ to Tₙ. The battery cells C₁ to Cₙ may be respectively connected between corresponding ones of the battery pins T₀ to Tₙ. For example, the battery cell C₁ may be connected between the battery pins T₀ and T₁, and the battery cell Cₙ may be connected between the battery pins Tₙ₋₁ and Tₙ.

The AFE integrated circuit AFE IC may include a multiplexer (MUX) 131. The MUX 131 may select two adjacent battery pins from among the battery pins T₀ to Tₙ. The MUX 131 may select two battery pins connected to any one of the battery cells C₁ to Cₙ.

The AFE integrated circuit AFE IC may include an analog-to-digital converter (ADC) 132. The ADC 132 may convert a voltage between two battery pins selected by the MUX 131 into a digital value. The ADC 132 may convert a cell voltage of the battery cell selected by the MUX 131 from among the battery cells C₁ to Cₙ into a digital value.

The AFE integrated circuit AFE IC may include a controller 133. The controller 133 may receive the digital value output from the ADC 132. The controller 133 may control the MUX 131 to sequentially select one by one the battery cells C₁ to Cₙ, and be synchronized to receive the digital value output from the ADC 132 to collect all the cell voltages of the battery cells C₁ to Cₙ.

The AFE integrated circuit AFE IC may have a plurality of balancing pins BS₁ to BSₙ. The balancing pins BS₁ to BSₙ may correspond to the battery cells C₁ to Cₙ, respectively. The first AFE 130a may include a plurality of balancing resistors Rb connected between the balancing pins BS₁ to BSₙ and some of the battery pins T₁ to Tₙ. For example, as shown in FIG. 2, a first balancing resistor Rb of the plurality of balancing resistors Rb may be connected between the balancing pin BS₁ and the battery pin T₁. An nth balancing resistor Rb of the plurality of balancing resistors Rb may be connected between the balancing pin BSₙ and the battery pin Tₙ.

The first AFE 130a may include a plurality of balancing switches SWb connected between the balancing pins BS₁ to BSₙ and some of the battery pins T₀ to Tₙ₋₁. For example, as shown in FIG. 2, a first balancing switch SWb of the plurality of balancing switches SWb may be connected between the balancing pin BS₁ and the battery pin T₀. An nth balancing switch SWb of the plurality of balancing switches SWb may be connected between the balancing pin BSₙ and the battery pin Tₙ₋₁. The plurality of balancing switches SWb may be included in the AFE integrated circuit AFE IC.

The AFE integrated circuit AFE IC may include a balancing control circuit 134. The balancing control circuit 134 may control the balancing switches SWb according to control of the controller 133. The controller 133 may determine a battery cell desired for cell balancing from among the battery cells C₁ to Cₙ according to a cell balancing reference (e.g., a preset or predetermined cell balancing reference). The controller 133 may control the balancing control circuit 134 to perform the cell balancing on the battery cell, and the balancing control circuit 134 may turn on the balancing switch SWb corresponding to the battery cell. The cell voltage of the battery cell may be reduced by consuming the power stored in the battery cell through the balancing resistor Rb connected to the balancing switch SWb.

The AFE IC may include communication pins TXHP, TXHN, RXHP, RXHN, TXLP, TXLN, RXLP, and RXLN, a high communication circuit 136, and a low communication circuit 137.

The controller 133 may use the low communication circuit 137 to transmit state information about the first battery block 110a to the main management unit 120, and the state information includes the cell voltages of the battery cells C₁ to Cₙ. The low communication circuit 137 may be connected to low transmission pins TXLP and TXLN and low reception pins RXLP and RXLN. A differential signal output through the low transmission pins TXLP and TXLN may be transferred to the main management unit 120 or to the lower stage AFE through a transformer TR.

The controller 133 may use the low communication circuit 137 to receive the signal transmitted by the main management unit 120 or the lower stage AFE. The signal transmitted by the main management unit 120 or the lower stage AFE may be received at the low reception pins RXLP and RXLN via the transformer TR.

A command signal of the main management unit 120 received through the low communication circuit 137 may be transferred to the second AFE 130b located on the upper stage through the high communication circuit 136. The high communication circuit 136 may be connected to the high transmission pins TXHP and TXHN and the high reception pins RXHP and RXHN. A differential signal output through the high transmission pins TXHP and TXHN may be transferred to the second AFE 130b through the transformer TR.

A signal including state information about the second battery block 110b transmitted by the second AFE 130b may be received by the high communication circuit 136 through the high reception pins RXHP and RXHN via the transformer TR, and may be transferred to the main management unit 120 through the low communication circuit 137.

FIG. 3 illustrates the second kind of AFE according to one or more embodiments.

Referring to FIG. 3, the highest stage AFE (e.g., the fourth AFE) 130d is shown, which is the second kind of AFE. The highest stage AFE 130d may have the same or substantially the same configuration as that of the first AFE 130a in FIG. 2, except the power compensation circuit 140 and a power controller 138 for controlling the power compensation circuit 140 may be included. Hereinafter, redundant description of the same or substantially the same elements as those described above with reference to FIG. 2 may not be repeated.

The highest stage AFE 130d may be configured to monitor the cell voltages, the temperatures, and/or the like of the highest stage battery cells C₁ to Cₙ in the highest battery block 110d, and may transmit, to the third AFE 130c, state information about the highest stage battery block 110d acquired by the monitoring. The state information about the highest stage battery block 110d may be transferred to the main management unit 120 through the third AFE 130c, the second AFE 130b, and the first AFE 130a. The highest stage AFE 130d may be configured to receive the command signal from the main management unit 120 through the third AFE 130c. The highest stage AFE 130d may be configured to perform cell balancing for equalizing or substantially equalizing the cell voltages of the highest stage battery cells C₁ to Cₙ in the battery block 110d.

The highest stage battery cells C₁ to Cₙ may be connected in series between the first and second block terminals BT1 and BT2. The first block terminal BT1 may be connected to the first pack terminal PT1 (e.g., see FIG. 1), and the second block terminal BT2 may be connected to the first block terminal of the third battery block 110c.

The highest stage AFE 130d may include one AFE integrated circuit AFE IC. The AFE integrated circuit AFE IC may have one pair of the input voltage pins HV and AGND, one pair of the output voltage pins VCC and GND, and at least one GPIO pin GPIO. The one pair of input voltage pins HV and AGND may be connected to the anode and cathode of the highest stage battery block 110d, respectively, and the block voltage of the highest stage battery block 110d may be applied thereto.

The highest stage AFE 130d may include the power circuit 135. The power circuit 135 may be the DC-DC converter circuit configured to generate the driving voltage Vcc for driving the highest stage AFE 130d from the input block voltage from the highest battery block 110d through the input voltage pins HV and AGND. According to one or more embodiments, as shown in FIG. 3, the power circuit 135 may be mounted in the AFE integrated circuit AFE IC.

According to other embodiments, the power circuit 135 may be located outside the AFE integrated circuit AFE IC, and the driving voltage Vcc generated by the power circuit 135 may be supplied to the AFE integrated circuit AFE IC. In some embodiments, the AFE integrated circuit AFE IC may include input voltage pins for receiving the driving voltage Vcc from the power circuit 135 located outside.

The one pair of output pins VCC and GND may output the driving voltage Vcc generated by the power circuit 135 to the power compensation circuit 140. The power compensation circuit 140 may include a power compensation resistor Rc and a power compensation switch SWc connected in series between the output voltage pins VCC and GND. The power compensation switch SWc may be controlled by a power compensation control signal output through the GPIO pin GPIO.

The AFE integrated circuit AFE IC may include the power controller 138 configured to output the power compensation control signal through the GPIO pin GPIO. The power controller 138 may be a lower-level component of the controller 133, and may control the output of the power compensation control signal.

The power compensation control signal may be a pulse width modulation (PWM) signal having a duty ratio. The duty ratio of the PWM power compensation control signal may be controlled by the main management unit 120 (e.g., see FIG. 1). The main management unit 120 may calculate the average cell voltage of the highest stage battery cells C₁ to Cₙ of the highest stage battery block 110d, and may calculate the average cell voltage of the battery cells of the other battery blocks 110a to 110c. The main management unit 120 may determine the duty ratio on the basis of the voltage difference between the average cell voltages of the highest battery block 110d and the other battery blocks 110a to 110c.

The AFE integrated circuit AFE IC may have a plurality of battery pins T₀ to Tₙ. The highest stage battery cells C₁ to Cₙ may be connected between the battery pins T₀ to Tₙ. The AFE integrated circuit AFE IC may include the MUX 131 configured to select two battery pins connected to one of the highest stage battery cells C₁ to Cₙ. The AFE integrated circuit AFE IC may include an ADC 132 configured to convert, to a digital value, a cell voltage of the highest stage battery cell selected by the MUX 131 from among the highest stage battery cells C₁ to Cₙ. The AFE integrated circuit AFE IC may include the controller 133 configured to receive the digital value output from the ADC 132 to collect all the cell voltages of the highest stage battery cells C₁ to Cₙ.

The AFE integrated circuit AFE IC may have the plurality of balancing pins BS₁ to BSₙ corresponding to the highest stage battery cells C₁ to Cₙ, respectively. The balancing pins BS₁ to BSₙ may respectively correspond to the battery cells C₁ to Cₙ. The highest stage AFE 130d may include the plurality of balancing resistors Rb connected between the balancing pins BS₁ to BSₙ and the battery pins T₁ to Tₙ. The highest stage AFE 130d may include the plurality of balancing switches SWb connected between the balancing pins BS₁ to BSₙ and the battery pins T₀ to Tₙ₋₁. The balancing switches SWb may be included in the AFE integrated circuit AFE IC.

The AFE integrated circuit AFE IC may include the balancing control circuit 134 configured to control the balancing switches SWb according to the control of the controller 133.

The AFE integrated circuit AFE IC may include communication pins TXHP, TXHN, RXHP and RXHN, TXLP, TXLN, RXLP, RXLN, the high communication circuit 136, and the low communication circuit 137.

The controller 133 may use the low communication circuit 137 to transmit the state information about the highest stage battery block 110d, wherein the state information includes the cell voltages of the highest stage battery cells C₁ to Cₙ. The low communication circuit 137 may be connected to the low transmission pins TXLP and TXLN and the low reception pins RXLP and RXLN. The differential signal output through the low transmission pins TXLP and TXLN may be transferred to the third AFE 130c through the transformer TR.

The controller 133 may use the low communication circuit 137 to receive the signal transmitted by the third AFE 130c. The signal transmitted by the third AFE 130c may be received at the low reception pins RXLP and RXLN via the transformer TR.

The high communication circuit 136 may be inactive or substantially inactive, because there may not be an AFE on an upper stage of the highest stage AFE 130d. The high transmission pins TXHP and TXHN and the high reception pins RXHP and RXHN connected to the high communication circuit 136 may be connected to each other to configure an internal loopback.

Because the high communication circuit 136 of the highest stage AFE 130d is inactive or substantially inactive, the AFE integrated circuit AFE IC of the highest stage AFE 130d may consume less power in comparison to the AFE integrated circuit AFE IC of the other AFEs 130a to 130c. The power supplied to the AFE integrated circuit AFE IC of the highest stage AFE 130d by the fourth battery block 110d may be less in comparison to the first to third battery blocks 110a to 110c, because the first to fourth AFEs 130a to 130d are driven using the power stored in the first to fourth battery blocks 110a to 110d. However, the fourth battery block 110d may consume the power uniformly or substantially uniformly with the first to third battery blocks 110a to 110c, because the fourth battery block 110d also supplies additional power to the power compensation circuit 140 connected through the highest stage AFE 130d.

The magnitude of the power consumed in the power compensation circuit 140 may be automatically determined by the main management unit 120. In some embodiments, the user may not separately control the power compensation circuit 140.

Specific implementation examples illustrated and described in the present disclosure are examples for description, and are not intended to limit the scope of the embodiments in no way. For conciseness, other functional aspects of conventional electronic configurations, control systems, software and the systems may be omitted. Furthermore, line connections or connection members between elements depicted in the drawings represent functional connections and/or physical or circuit connections by way of example, and in actual applications, they may be replaced or embodied as various additional functional connections, physical connections, or circuit connections. In addition, the described elements are not regarded as inevitably required elements unless they are specifically mentioned as being "essential" or "critical."

In describing the embodiments (particularly claims), the term "the" and similar demonstrative terms used herein may include both singular and plural references. Also, it should be understood that any numerical range recited herein is intended to include all sub-ranges subsumed therein (unless expressly indicated otherwise) and therefore, the disclosed numeral ranges include every individual value between the minimum and maximum values of the numeral ranges. Finally, operations constituting the method of the present disclosure may be performed in appropriate order unless explicitly described in terms of order or described to the contrary. In other words, the present disclosure is not necessarily limited to the order in which the individual operations are recited. All examples described herein or the terms indicative thereof ("for example", etc.) used herein are merely to describe the present disclosure in greater detail, and, therefore, it should be understood that the scope of the present disclosure is not limited to the example embodiments described above or by the use of such terms unless limited by the appended claims. Also, it should be apparent to those skilled in the art that various alterations, substitutions, and modifications may be made within the scope of the appended claims or equivalents thereof.

According to one or more embodiments of the present disclosure, because the battery cells connected to the highest stage AFE are actively controlled using the highest stage AFE to consume the additional current, cell voltage unbalance due to the difference in current consumption between the AFEs may be prevented or substantially prevented, and the use performance of the battery pack may be improved.

As the battery management system internally controls the current consumption of the highest AFE, user convenience may be increased.

The electronic or electric devices and/or any other relevant devices or components according to embodiments of the present disclosure described herein may be implemented utilizing any suitable hardware, firmware (e.g. an application-specific integrated circuit), software, or a combination of software, firmware, and hardware. For example, the various components of these devices may be formed on one integrated circuit (IC) chip or on separate IC chips. Further, the various components of these devices may be implemented on a flexible printed circuit film, a tape carrier package (TCP), a printed circuit board (PCB), or formed on one substrate. Further, the various components of these devices may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the example embodiments of the present disclosure.

The foregoing is illustrative of some embodiments of the present disclosure, and is not to be construed as limiting thereof. Although some embodiments have been described, those skilled in the art will readily appreciate that various modifications are possible in the embodiments without departing from the scope of the present disclosure. It will be understood that descriptions of features or aspects within each embodiment should typically be considered as available for other similar features or aspects in other embodiments, unless otherwise described. Thus, as would be apparent to one of ordinary skill in the art, features, characteristics, and/or elements described in connection with a particular embodiment may be used singly or in combination with features, characteristics, and/or elements described in connection with other embodiments unless otherwise specifically indicated. Therefore, it is to be understood that the foregoing is illustrative of various example embodiments and is not to be construed as limited to the specific embodiments disclosed herein, and that various modifications to the disclosed embodiments, as well as other example embodiments, are intended to be included within the scope of the present disclosure as defined in the appended claims, and their equivalents.

Further Embodiments are set out in the following Numbered Paragraphs (NPs):
NP1. A battery pack comprising:
   a plurality of battery blocks, each comprising a plurality of battery cells;
   a plurality of analog front ends (AFEs) sequentially located, and configured to monitor states of the plurality of battery blocks, respectively;
   a main management unit configured to communicate with the plurality of AFEs; and
   a power compensation circuit connected to a highest stage AFE from among the plurality of AFEs, and comprising a power compensation resistor and a power compensation switch connected in series with each other,
   wherein a lowest stage AFE from among the plurality of AFEs is configured to communicate with an upper stage AFE thereof and the main management unit,
   wherein the highest stage AFE is configured to communicate with a lower stage AFE thereof, and
   wherein the highest stage AFE comprises:
      a power circuit configured to generate a driving voltage from a block voltage of a highest stage battery block from among the plurality of battery blocks;
      a pair of output voltage pins configured to output the driving voltage to the power compensation circuit; and
      a global purpose input output (GPIO) pin configured to output a power compensation control signal to control the power compensation switch.
NP2. The battery pack of NP1, wherein the power compensation control signal comprises a PWM signal having a duty ratio.
NP3. The battery pack of NP2, wherein the main management unit is configured to control the duty ratio of the PWM signal.
NP4. The battery pack of NP1,
   wherein the highest stage AFE further comprises one pair of input voltage pins configured to receive the block voltage, and
   wherein the one pair of input voltage pins are connected to terminals at opposite ends of highest stage battery cells that are connected in series in the highest stage battery block, respectively.
NP5. The battery pack of NP4, wherein the highest stage AFE further comprises:
   a plurality of battery pins;
   a multiplexer configured to select two adjacent battery pins from among the plurality of battery pins;
   an analog-to-digital converter (ADC) configured to convert a voltage between the two adjacent battery pins selected by the multiplexer into a digital value; and
   a controller configured to collect cell voltages from each of the highest stage battery cells based on the digital value output by the ADC, and
   wherein the highest stage battery cells are connected between the plurality of battery pins.
NP6. The battery pack of NP5, wherein the highest stage AFE further comprises:
   a plurality of balancing pins corresponding to the highest stage battery cells, respectively;
   a plurality of balancing resistors connected between the plurality of balancing pins and some of the plurality of battery pins;
   a plurality of balancing switches connected between the plurality of balancing pins and some of the plurality of battery pins; and
   a balancing control circuit configured to control the plurality of balancing switches by control of the controller.
NP7. The battery pack of NP5, wherein the cell voltages of the highest stage battery cells collected by the highest stage AFE are transferred to the main management unit through other AFEs from among the plurality of AFEs.
NP8. The battery pack of NP7, wherein each of the other AFEs comprises:
   a controller configured to collect the cell voltages of the battery cells of a corresponding battery block from among the plurality of battery blocks;
   a low communication circuit configured to transmit the cell voltages to a lower stage AFE thereof; and
   a high communication circuit configured to transmit a command of the main management unit received through the low communication circuit to a higher stage AFE thereof.
NP9. The battery pack of NP4, wherein the highest stage AFE comprises one AFE integrated circuit (IC) comprising the one pair of input voltage pins, the one pair of output voltage pins, and the GPIO pin.
NP10. The battery pack of NP1,
   wherein the plurality of AFEs comprises at least one intermediate AFE sequentially located between the highest stage AFE and the lowest stage AFE, and wherein the at least one intermediate AFE is configured to communicate with an upper stage AFE thereof and a lower stage AFE thereof.

## Claims

1. A battery pack comprising:
a plurality of battery blocks, each comprising a plurality of battery cells;
a plurality of analog front ends (AFEs) sequentially located, and configured to monitor states of the plurality of battery blocks, respectively;
a main management unit configured to communicate with the plurality of AFEs; and
a power compensation circuit connected to a highest stage AFE from among the plurality of AFEs, and comprising a power compensation resistor and a power compensation switch connected in series with each other,
wherein a lowest stage AFE from among the plurality of AFEs is configured to communicate with an upper stage AFE from among the plurality of AFEs and to communicate with the main management unit,
wherein the highest stage AFE is configured to communicate with a lower stage AFE from among the plurality of AFEs, and
wherein the highest stage AFE comprises:
a power circuit configured to generate a driving voltage from a block voltage of a highest stage battery block from among the plurality of battery blocks;
a pair of output voltage pins configured to output the driving voltage to the power compensation circuit; and
a global purpose input output (GPIO) pin configured to output a power compensation control signal to control the power compensation switch.

2. The battery pack as claimed in claim 1, wherein the power compensation control signal comprises a PWM signal having a duty ratio.

3. The battery pack as claimed in claim 2, wherein the main management unit is configured to control the duty ratio of the PWM signal.

4. The battery pack as claimed in any preceding claim,
wherein the highest stage AFE further comprises one pair of input voltage pins configured to receive the block voltage, and
wherein the one pair of input voltage pins are connected to terminals at opposite ends of highest stage battery cells that are connected in series in the highest stage battery block, respectively.

5. The battery pack as claimed in claim 4, wherein the highest stage AFE further comprises:
a plurality of battery pins;
a multiplexer configured to select two adjacent battery pins from among the plurality of battery pins;
an analog-to-digital converter (ADC) configured to convert a voltage between the two adjacent battery pins selected by the multiplexer into a digital value; and
a controller configured to collect cell voltages from each of the highest stage battery cells based on the digital value output by the ADC, and
wherein the highest stage battery cells are connected between the plurality of battery pins.

6. The battery pack as claimed in claim 5, wherein the highest stage AFE further comprises:
a plurality of balancing pins corresponding to the highest stage battery cells, respectively;
a plurality of balancing resistors, each balancing resistor of the plurality of balancing transistors connected between a balancing pin of the plurality of balancing pins and a first battery pin of the adjacent pair of battery pins connected to the battery cell corresponding to the balancing pin;
a plurality of balancing switches, each balancing switch of the plurality of balancing switches connected between a balancing pin of the plurality of balancing pins and a second battery pin of the adjacent pair of battery pins connected to the battery cell corresponding to the balancing pin; and
a balancing control circuit configured to control the plurality of balancing switches by control of the controller.

7. The battery pack as claimed in claim 5 or claim 6, wherein the cell voltages of the highest stage battery cells collected by the highest stage AFE are transferred to the main management unit through other AFEs from among the plurality of AFEs.

8. The battery pack as claimed in claim 7, wherein each of the other AFEs of the plurality of AFEs comprises:
a controller configured to collect the cell voltages of the battery cells of a corresponding battery block from among the plurality of battery blocks;
a low communication circuit configured to transmit the cell voltages to a lower stage AFE from among the plurality of AFEs; and
a high communication circuit configured to transmit a command of the main management unit received through the low communication circuit to a higher stage AFE from among the plurality of AFEs.

9. The battery pack as claimed in any one of claims 4-8, wherein the highest stage AFE comprises one AFE integrated circuit (IC) comprising the one pair of input voltage pins, the one pair of output voltage pins, and the GPIO pin.

10. The battery pack as claimed in any preceding claim,
wherein the plurality of AFEs comprises at least one intermediate AFE sequentially located between the highest stage AFE and the lowest stage AFE, and
wherein the at least one intermediate AFE is configured to communicate with an upper stage AFE from among the plurality of AFEs and a lower stage AFE from among the plurality of AFEs.
